# EUROPÄISCHE PATENTSCHRIFT

(11) **EP 1 491 815 B1**
(45) Veröffentlichungstag und Bekanntmachung des Hinweises auf die Patenterteilung: **03.03.2010**
(21) Anmeldenummer: 04014811.6
(22) Anmeldetag: 24.06.2004
(51) Int. Cl.: F21S 8/10, F21V 8/00, B60Q 3/02, F21Y 101/02, F21W 101/00

(54) **Beleuchtungseinrichtung für ein Fahrzeug**
Vehicle lighting device
Dispositif d'éclairage pour véhicule

(30) Priorität: 24.06.2003 DE 10328216
(43) Veröffentlichungstag der Anmeldung: 29.12.2004
(73) Patentinhaber: Hella KGaA Hueck & Co., 59552 Lippstadt (DE)
(72) Erfinder: Henneböhle, Klaus, 33142 Büren (DE)

(56) Entgegenhaltungen:
- DE-A1- 19 804 440
- DE-A1- 19 850 443
- DE-U1- 8 712 678

## Beschreibung

Die Erfindung betrifft eine Beleuchtungseinrichtung für ein Fahrzeug, insbesondere eine Signalleuchte, mit mindestens einem Leuchtmittel und zumindest einem mit seiner Lichteinkoppelfläche im Lichtabstrahlbereich des Leuchtmittels angeordneten stabförmigen Lichtleiter, der an seinem Außenumfang mehrere in Erstreckungsrichtung des Lichtleiters zueinander versetzte optische Auskoppelelemente aufweist, an denen innerhalb des Lichtleiters darauf auftreffendes Licht derart reflektiert wird, dass es an einem dem betreffenden Auskoppelelement gegenüberliegenden Umfangsbereich des Lichtleiters aus diesem austritt, wobei zueinander benachbart nebeneinander angeordnete Auskoppelelemente in Erstreckungsrichtung des Lichtleiters jeweils durch einen auskoppelelementfreien Zwischenbereich voneinander beabstandet sind.

Eine derartige Beleuchtungseinrichtung ist aus DE 198 04 440 A1 bekannt. Sie weist einen stabförmigen Lichtleiter auf, der an seinem Umfang einen in Längserstreckungsrichtung des Lichtleiters verlaufenden streifenförmigen Bereich aufweist, in dem eine Vielzahl von Prismen angeordnet sind, an denen das in dem Lichtleiter geführte Licht derart umgelenkt wird, dass es an einem dem betreffenden Prisma gegenüberliegenden Umfangsbereich des Lichtleiters aus diesem austritt. Zueinander benachbart angeordnete Prismen sind jeweils in Längserstreckungsrichtung des Lichtleiters voneinander beabstandet, wobei die Abstände über die Länge des Lichtleiters konstant sind. Auch die Abmessung, weiche die Prismen in Längserstreckungsrichtung des Lichtleiters aufweisen, ist entlang der Längsachse des Lichtleiters konstant. Quer zur Längserstreckung des Lichtleiters weisen die Prismen eine Breite auf, die in Richtung der Längserstreckung des Lichtleiters variiert. Dabei nimmt die Breite, ausgehend von der Lichteinkoppelfläche zum gegenüberliegenden Ende des Lichtleiters hin derart zu, dass die über die Länge des Lichtleiters aus diesem ausgekoppelte Lichtmenge in etwa konstant ist. Die Beleuchtungseinrichtung hat jedoch den Nachteil, dass durch die unterschiedliche Breite, welche die Prismen entlang des Lichtleiters aufweisen, der Abstrahlwinkel, unter dem das in dem Lichtleiter geführte Licht aus diesem austritt, variiert. Dabei nimmt der Abstrahlwinkel, ausgehend von der Lichteinkoppelfläche zum gegenüberliegenden Ende des Lichtleiters hin zu, so dass trotz der über die Länge des Lichtleiters etwa konstanten ausgekoppelten Lichtmenge, bei Betrachtung des Lichtleiters aus einer bestimmten Richtung die Helligkeit des Lichts mit zunehmendem Abstand von der Lichteinkoppelfläche abnimmt. Dies ist insbesondere bei einer Signalleuchte nachteilig, bei der aufgrund von gesetzlichen Bestimmungen, bei Betrachtung des Lichtleiters aus einer bestimmten Richtung, beispielsweise bei einer Ansicht auf die Rückseite eines Fahrzeugs, entlang des Lichtleiters eine vorgegebene Leuchtdichteverteilung erreicht werden muss.

Aus DE 200 19 073 U1 ist ferner eine Beleuchtungseinrichtung zum indirekten Beleuchten eines Fahrzeuginnenraums bekannt, die einen stabförmigen Lichtleiter hat, bei dem die am Umfang des Lichtleiters angeordneten optischen Auskoppelelemente entlang des Lichtleiters unterschiedliche Abstände zueinander aufweisen. Durch diese Maßnahme lässt sich zwar entlang des Lichtleiters eine gleichmäßige Helligkeitsverteilung erreichen, jedoch ist eine derartige Beleuchtungseinrichtung als Signalleuchte nur bedingt geeignet, weil der Lichtleiter sowohl bei eingeschalteter als auch bei ausgeschalteter Beleuchtungseinrichtung aufgrund der unterschiedlichen Abstände der Auskoppelelemente ein ungleichmäßiges Erscheinungsbild aufweist.

Es besteht deshalb die Aufgabe, eine Beleuchtungseinrichtung der eingangs genannten Art zu schaffen, die in Erstreckungsrichtung des Lichtleiters eine von der in dem Lichtleiter jeweils vorhandenen Lichtmenge abweichende Helligkeitsverteilung des aus dem Lichtleiter ausgekoppelten Lichts ermöglicht. Dabei soll der Lichtleiter dennoch ein gleichmäßiges Erscheinungsbild aufweisen.

Diese Aufgabe wird dadurch gelöst, dass die Länge, welche die Zwischenbereiche in Erstreckungsrichtung des Lichtleiters aufweisen und die Länge, welche die Auskoppelelemente in Erstreckungsrichtung des Lichtleiters aufweisen, in Erstreckungsrichtung des Lichtleiters jeweils derart variieren, dass die Länge der jeweils aus einem Auskoppelelement und einem in Erstreckungsrichtung des Lichtleiters daran angrenzenden Zwischenbereich gebildeten Abschnitte etwa konstant ist.

Die Länge der Auskoppelelemente nimmt also entlang des Lichtleiters jeweils in dem Maße zu (ab), in dem die Länge der zu den Auskoppelelementen jeweils benachbarten Zwischenbereiche abnimmt (zunimmt). Somit kann die Länge der Auskoppelelemente bei der Herstellung oder Konstruktion des Lichtleiters entsprechend der jeweils einzustellenden Helligkeit des aus dem Lichtleiter auszukoppelnden Lichts gewählt werden, so dass auf einfache Weise entlang der Längserstreckung des Lichtleiters eine gewünschte Helligkeitsverteilung eingestellt werden kann. In scheinbar widersprüchlicher Weise weist der Lichtleiter trotz der unterschiedlich langen Auskoppelelemente ein gleichmäßiges Erscheinungsbild auf, da die Summe der Länge eines Auskoppelelements und der Länge eines daran angrenzenden Zwischenbereichs in Erstreckungsrichtung des Lichtleiters jeweils in etwa konstant bleibt und somit die Auskoppelelemente in einem konstanten, gleichmäßigen Raster angeordnet sind. Die quer zur Längserstreckung des Lichtleiters vorhandene Breite der Auskoppelelemente kann entlang der Längserstreckungsrichtung des Lichtleiters konstant sein, so dass der Abstrahlwinkel des von dem Lichtleiter abgestrahlten Lichts in Ebenen, die rechtwinklig zur Längsachse des Lichtleiters orientiert und auf der Längsmittelachse des Lichtleiters voneinander beabstandet sind, etwa konstant ist. Selbstverständlich ist es aber auch möglich, dass zusätzlich zu der Länge der Auskoppelelemente auch die Breite der Auskoppelelemente in Längserstreckungsrichtung des Lichtleiters variiert, wenn entlang des Lichtleiters eine unterschiedlich breite Lichtabstrahlung gewünscht wird.

Besonders vorteilhaft ist, wenn die Länge der Auskoppelelemente mit zunehmendem Abstand von der Lichteinkoppelfläche derart zunimmt, dass die Helligkeit des aus dem Lichtleiter austretenden Lichts mit zunehmendem Abstand von der Lichteinkoppelfläche zunimmt. Die Helligkeit des Lichtleiters nimmt also entgegen der in dem Lichtleiter vorhandenen Lichtmenge mit der Entfernung von der Lichteinkoppelfläche zu statt ab. Dadurch ist es beispielsweise möglich, bei einer Signalleuchte, deren Lichtleiter eine Pfeilung aufweist, bei Betrachtung aus einer bestimmten Richtung entlang der Projektion des Lichtleiters in diese Richtung das Licht mit einer etwa konstanten Helligkeit aus dem Lichtleiter auszukoppeln.

Vorteilhaft ist, wenn der Lichtleiter einen von einer geraden Linie abweichenden, vorzugsweise an die Form einer Fahrzeugaußenhaut angepassten, insbesondere bogenförmig gekrümmten Verlauf aufweist. Der Lichtleiter kann dann in Gebrauchsstellung beispielsweise in horizontaler Richtung bogenförmig um eine Ecke eines Fahrzeugs herumgeführt sein, wobei das Leuchtmittel an einer Längsseite des Fahrzeugs, beispielsweise am Kotflügel angeordnet sein kann. Dennoch kann - wenn die Länge der Auskoppelelemente entlag des Lichtleiters entsprechend gewählt ist - der größte Teil des Lichts an einer quer zu der Längsseite angeordneten Fahrzeugseite, beispielsweise an der Vorder- oder Rückseite des Fahrzeugs aus dem Lichtleiter ausgekoppelt werden. Dies ist vor allem bei Signalleuchten vorteilhaft, die aufgrund gesetzlicher Vorgaben im Wesentlichen in oder entgegen der Vorwärtsfahrtrichtung des Fahrzeugs abstrahlen müssen.

Bei einer zweckmäßigen Ausgestaltung der Erfindung ist vorgesehen, dass die optischen Auskoppelelemente derart ausgebildet sind, dass das innerhalb des Lichtleiters darauf auftreffende Licht der Totalreflexion unterliegt, und dass die Auskoppelelemente vorzugsweise Prismen sind, die gegebenenfalls symmetrisch bezüglich einer quer zur Längserstreckung des Lichtleiters verlaufenden Ebene ausgebildet sind. Durch diese Maßnahme(n) kann das Licht weitgehend verlustfrei von der Lichteinkoppelfläche zu der Auskoppelstelle des Lichtleiters geführt werden. Auch wird eine unerwünschte Lichtauskopplung durch die Auskoppelelemente zur der Rückseite des Lichtleiters vermieden.

Vorteilhaft ist, wenn die Lichteinkoppelfläche an wenigstens einer Stirnseite des Lichtleiters angeordnet ist, und wenn die Lichteinkoppelfläche vorzugsweise an einem im wesentlichen auskoppelelementfreien Lichtleiter-Einkoppelabschnitt vorgesehen ist, an dem sich der Querschnitt des Lichtleiters, ausgehend von der Lichteinkoppelfläche zu dem davon entfernten Ende des Einkoppelabschnitts derart vorzugsweise parabelförmig aufweitet, dass das in dem Lichtleiter geführte Licht unter Totalreflexionsbedingungen auf die Umfangswand des Einkoppelabschnitts auftrifft. Das Licht kann dann in dem Lichtleiter noch verlustarmer von der Lichteinkoppelfläche zu der Auskoppelstelle des Lichtleiters transportiert werden.

Bei einer vorteilhaften Ausführungsform der Erfindung sind die Auskoppelelemente innerhalb eines sich am Außenumfang des Lichtleiters im Wesentlichen in dessen Längsrichtung erstreckenden streifenförmigen Bereiches angeordnet. Der streifenförmige Bereich ermöglicht eine kostengünstige Fertigung der Lichtleiter, bei welcher die Kontur der Auskoppelelemente beispielsweise durch Drahtscheiden hergestellt werden kann. Der streifenförmige Bereich kann als Optikschulter ausgebildet sein. An einem dem Lichtleiter zugeordneten Leuchtengehäuse kann dann eine zu der Optikschulter passende Aufnahme vorgesehen sein, um bei der Montage die Positionierung und Ausrichtung des Lichtleiters an dem Leuchtengehäuse zu erleichtern.

Bei einer zweckmäßigen Ausführungsform der Erfindung weist der streifenförmige Bereich eine in Umfangsrichtung des Lichtleiters verlaufende Komponente auf und ist insbesondere entlang einer Wendel um den Lichtleiter herumgeführt. Diese Ausführungsform ist vor allem bei Lichtleitern vorteilhaft, die dreidimensional im Raum gekrümmt sind.

Der die Auskoppelelemente aufweisende streifenförmige Bereich des Lichtleiters kann wenigstens eine Unterbrechung aufweisen. Die Unterbrechung kann bei einer als Rückleuchte ausgebildeten Beleuchtungseinrichtung beispielsweise durch einen Rückstrahler oder ein Element für eine andere Leuchtenfunktion überdeckt sein.

Bei einer vorteilhaften Ausführungsform weist der Lichtleiter an seinem Außenumfang wenigstens zwei in Umfangsrichtung des Lichtleiters versetzt zueinander angeordnete streifenförmige Bereiche mit Auskoppelelementen auf, wobei die streifenförmigen Bereiche gegebenenfalls quer zur Längserstreckung des Lichtleiters voneinander beabstandet sind. Dadurch kann in einer Ebene, die quer zur Längserstreckung des Lichtleiters angeordnet ist, eine breitere Abstrahlcharakteristik des aus dem Lichtleiter ausgekoppelten Lichts erreicht werden. Dies ist insbesondere bei Lichtleitern vorteilhaft, die in Gebrauchsstellung im Wesentlichen in vertikaler Richtung verlaufen. Eine derartige Beleuchtungseinrichtung kann beispielsweise an der Rückseite einer C-Säule eines Kraftfahrzeugs angeordnet sein. Die Streifen können abschnittweise oder über ihre gesamte Länge die gleiche oder eine unterschiedliche Variation der Länge ihrer Auskoppelelemente aufweisen.

Bei einer Ausführungsform der Erfindung ist vorgesehen, dass zumindest der Umfangsbereich des Lichtleiters, an dem das innerhalb des Lichtleiters geführte Licht aus diesem austritt, mit einer transparenten Farbschicht beschichtet ist. Der Kern des Lichtleiters besteht dabei vorzugsweise aus einem glasklaren Material, das eine gute Lichtleitung ermöglicht. Der Lichtleiter kann bei seiner Herstellung mit dem Werkstoff der Farbschicht umspritzt werden.

Erwähnt werden soll noch, dass zumindest der Umfangsbereich des Lichtleiters, an dem das innerhalb des Lichtleiters geführte Licht aus diesem austritt, eine Oberflächenrauhigkeit aufweisen kann. Dadurch kann entlang des Lichtleiters eine noch gleichmäßigere Lichtabgabe erreicht werden. Allerdings bewirkt die Oberflächenrauhigkeit auch eine gewisse Streuung des aus dem Lichtleiter ausgekoppelten Lichts.

Nachfolgend ist ein Ausführungsbeispiel der Erfindung anhand der Zeichnung näher erläutert. Es zeigen:
- Fig. 1: eine Seitenansicht auf einer Rückleuchte für ein Fahrzeug, die einen stabförmigen Lichtleiter und als Leuchtmittel eine Leuchtdiode aufweist, wobei das aus dem Lichtleiter entgegen der Vorwärtsfahrtrichtung des Fahrzeugs ausgekoppelte Licht durch Pfeile dargestellt ist,
- Fig. 2: eine vergrößerte Darstellung des in Fig. 1 mit II bezeichneten Bereichs der Rückleuchte, wobei beispielhaft auch zwei Lichtstrahlen dargestellt sind,
- Fig. 3: eine vergrößerte Darstellung des in Fig. 1 mit III bezeichneten Lichtleiterbereichs,
- Fig. 4: eine vergrößerte Darstellung des in Fig. 1 mit IV bezeichneten Lichtleiterbereichs, wobei beispielhaft auch zwei Lichtstrahlen dargestellt sind,
- Fig. 5: eine Seitenansicht des von der Leuchtdiode beabstandeten Endes des Lichtleiters und
- Fig. 6: einen Querschnitt durch den Lichtleiter.

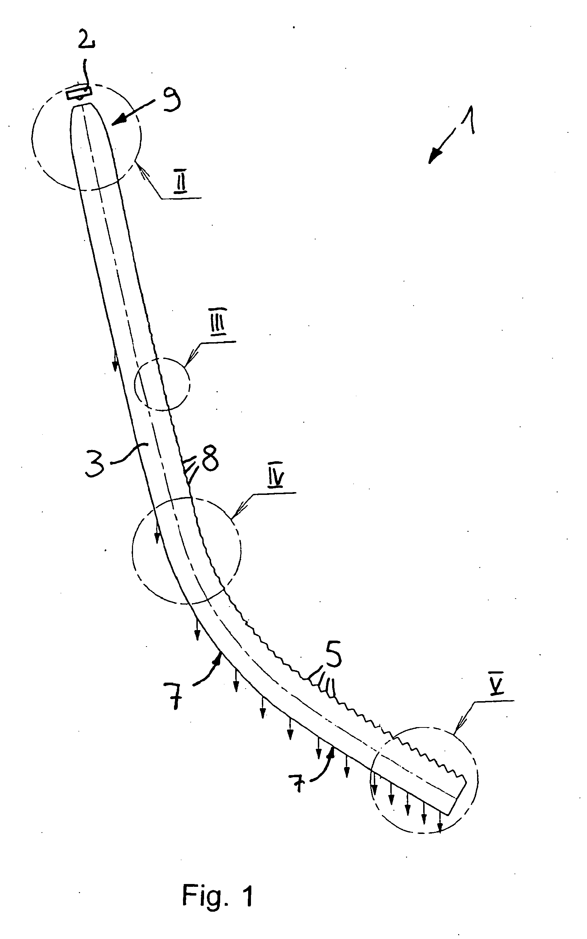

Eine in Fig. 1 im Ganzen mit 1 bezeichnete, als Signalleuchte ausgebildete Beleuchtungseinrichtung für ein Fahrzeug weist als Leuchtmittel 2 eine Leuchtdiode auf, die mit ihrer Abstrahlseite einer an einer Stirnseite eines stabförmigen Lichtleiters 3 angeordneten Lichteinkoppelfläche 4 zugewandt ist. Das Leuchtmittel 2 und der Lichtleiter 3 sind an einem in der Zeichnung nicht näher dargestellten Leuchtengehäuse angeordnet, das Befestigungsstellen zum Verbinden mit der Karosserie des Fahrzeugs aufweist und als Träger für das Leuchtmittel 2 und den Lichtleiter 3 dient.

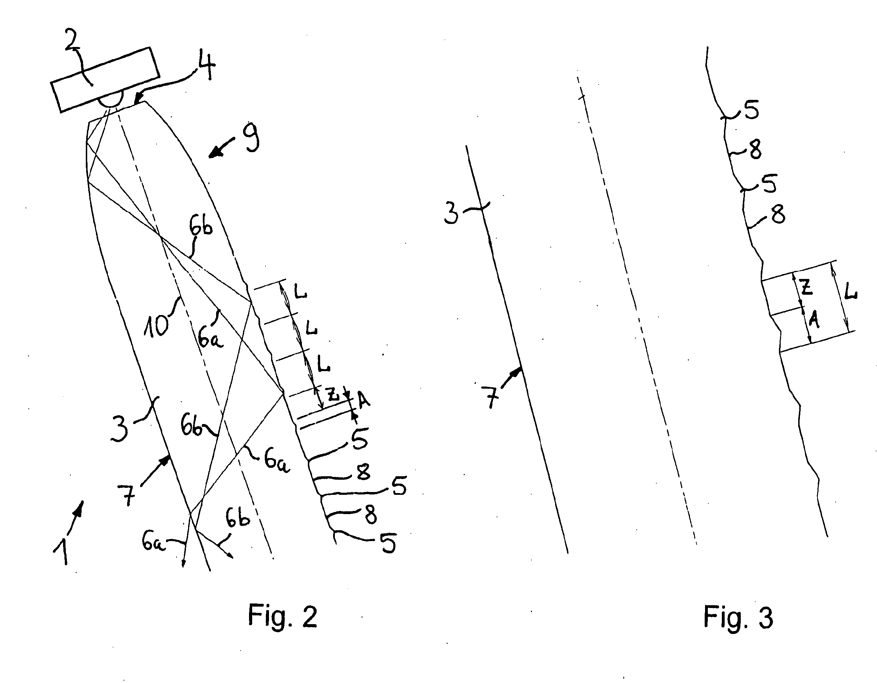

Der Lichtleiter 3 hat an seinem Außenumfang einen in Längsrichtung des Lichtleiters 3 verlaufenden streifenförmigen Bereich, in dem eine Vielzahl von optischen Auskoppelelementen 5 in Längserstreckungsrichtung des Lichtleiters 3 zueinander versetzt nebeneinander angeordnet sind. Wie in Fig. 2, 4 und 5 erkennbar ist, werden die von dem vom Leuchtmittel 2 abgestrahlten und durch die Lichteinkoppelfläche 4 in den Lichtleiter 3 eingekoppelten Lichtstrahlen 6a beim Auftreffen auf die Auskoppelelemente 5 unter Ausnutzung der Totalreflexion derart an den Auskoppelelementen 5 umgelenkt, dass sie jeweils an einem dem betreffenden Auskoppelelement 5 gegenüberliegenden Umfangsbereich 7 des Lichtleiters 3 aus diesem austreten.

Zueinander benachbart nebeneinander angeordnete Auskoppelelemente 5 sind in Längsrichtung des Lichtleiters 3 jeweils durch einen Zwischenbereich 8 voneinander beabstandet, in dem kein Auskoppelelement 5 angeordnet ist. Beim Auftreffen auf die Zwischenbereiche 8 werden die in den Lichtleiter 3 geführten Lichtstrahlen 6b derart umgelenkt, dass sie auf einen dem betreffenden Zwischenbereich 8 gegenüberliegenden Umfangsbereich des Lichtleiters 3 auftreffen und an diesem unter Totalreflexionsbedingungen in das Innere des Lichtleiters 3 zurückreflektiert werden.

Wie in Fig. 1 bis 3 besonders gut erkennbar ist, nimmt die Länge A, welche die Auskoppelelemente 5 in Längserstreckungsrichtung des Lichtleiters 3 aufweisen, ausgehend von der Lichteinkoppelfläche 4 zu dem davon entfernten Ende des Lichtleiters 3 hin zu. Außerdem ist erkennbar, dass die Länge Z, welche die Zwischenbereiche 8 in Längserstreckungsrichtung des Lichtleiters 3 aufweisen, ausgehend von der Lichteinkoppelfläche 4 zu dem davon entfernten Ende des Lichtleiters 3 hin abnimmt. Dabei entspricht die Zunahme der Länge A der Auskoppelelemente 5 jeweils der Abnahme der Länge Z der Zwischenbereiche 5, so dass die Länge L der jeweils aus einem Auskoppelelement 5 und einem in Erstreckungsrichtung des Lichtleiters 3 daran angrenzenden Zwischenbereich 8 gebildeten Abschnitte in Längsrichtung des Lichtleiters 3 in dem die Auskoppelelemente 5 aufweisenden Teilbereich des Lichtleiters 3 konstant ist.

In Fig. 1 ist erkennbar, dass der Lichtleiter 3 einen bogenförmig gekrümmten Verlauf aufweist. In Gebrauchsstellung ist der Lichtleiter 3 etwa in einer Horizontalebene über einen Eckbereich eines Fahrzeughecks herumgeführt, wobei das Leuchtmittel 2 und der Endbereich des Lichtleiters 3, an dem die Lichteinkoppelfläche 4 angeordnet ist, jeweils an der linken oder rechten Fahrzeugseite und der gegenüberliegende Endbereich des Lichtleiters 3 an der Rückseite des Fahrzeugs angeordnet sind. Trotz dieser Pfeilung strahlt der Lichtleiter 3 im Wesentlichen zur Rückseite des Fahrzeugs hin ab. Dies wird dadurch erreicht, dass an dem Endbereich des Lichtleiters 3, der von dem Leuchtmittel 2 entfernt angeordnet ist, eine größere Lichtmenge aus dem Lichtleiter 3 ausgekoppelt wird als an dem Endbereich, der zu dem Leuchtmittel 2 benachbart ist. Die Länge Z der Zwischenbereiche 8 ist dazu an dem von der Lichteinkoppelfläche 4 beabstandeten Endbereich des Lichtleiters 3 bis auf Null reduziert, so das dort praktisch das gesamte noch in dem Lichtleiter 3 befindliche Licht aus diesem ausgekoppelt wird.

Wie in Fig. 2 besonders gut erkennbar ist, weist der Lichtleiter 3 an seinem dem Leuchtmittel 2 zugewandten Endbereich einen Einkoppelabschnitt 9 auf, an dessen Stirnseite die Lichteinkoppelfläche 4 angeordnet ist. Der Einkoppelabschnitt 9 weist keine Auskoppelelemente 5 auf. Deutlich ist erkennbar, dass sich der Querschnitt des Lichtleiters 3, ausgehend von der Lichteinkoppelfläche 4 zu dem davon entfernten Ende des Einkoppelabschnitts 9 etwa parabelartig aufweitet, derart, dass das durch die Lichteinkoppelfläche 4 in den Lichtleiter 3 eingekoppelte Licht unter Total reflexions bedingungen auf die Umfangswand des Einkoppelabschnitts 9 auftrifft und im weiteren Verlauf des Lichtleiters 3 auch beim Auftreffen auf die Zwischenbereiche 8 und/oder die Auskoppelelemente 5 der Totalreflexion unterliegt.

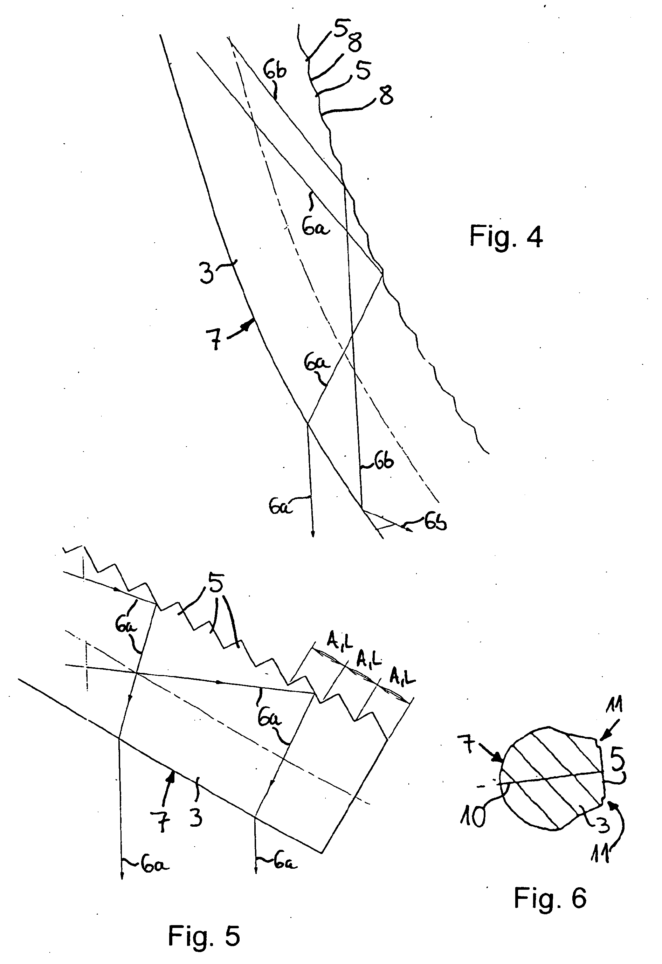

Die Auskoppelelemente 5 sind jeweils als Prismen ausgebildet, die mit ihrer Achse quer zur Längserstreckung des Lichtleiters 3 orientiert sind, und zwar etwa rechtwinklig. In Fig. 1 ist erkennbar, dass die Achsen der Prismen etwa parallel zueinander verlaufen. Die Prismen sind als Vorsprünge ausgebildet, welche über die Ebenen der daran jeweils angrenzenden Zwischenbereiche 8 radial vorstehen. In Fig. 5 ist erkennbar, dass an dem von der Lichteinkoppelfläche 4 entfernten Endbereich des Lichtleiters 3 die der Lichteinkoppelfläche 4 zugewandten Schrägflächen der Prismen stärker gegenüber der Längsmittelachse des Lichtleiters 3 geneigt sind als die der Lichteinkoppelfläche 4 abgewandten Schrägflächen der Prismen. Durch diese Maßnahme wird eine besonders hoher Anteil des in dem Lichtleiter 3 geführten Lichts an dem Umfangsbereich 7 aus dem Lichtleiter ausgekoppelt. In Fig. 2 und 4 ist erkennbar, dass in einem etwa mittig zwischen den Stirnseiten des Lichtleiters befindlichen Lichtleiterabschnitt und in einem zwischen diesem Abschnitt und dem Einkoppelabschnitt 9 befindlichen Bereich des Lichtleiters 3 die Prismen etwa symmetrisch bezüglich einer normal zur Längserstreckung des Lichtleiters 3 verlaufenden Ebene ausgebildet sind.

In Fig. 6 ist erkennbar, dass der Lichtleiter 3 symmetrisch bezüglich einer Längsmittelebene 10 ausgebildet ist und in seiner von den Auskoppelelementen 5 beabstandeten Hälfte etwa halbreisförmig gerundet ist. Die andere, die Auskoppelelemente 5 aufweisende Hälfte des Lichtleiters 3 ist etwa trapezförmig ausgebildet. An den Axialenden der Auskoppelelemente 5 ist beidseits der Längsmittelebene 10 jeweils eine Optikschulter 11 gebildet.

## Patentansprüche

1. Beleuchtungseinrichtung (1) für ein Fahrzeug, insbesondere Signalleuchte, mit mindestens einem Leuchtmittel (2) und zumindest einem mit seiner Lichteinkoppelfläche (4) im Lichtabstrahlbereich des Leuchtmittels (3) angeordneten stabförmigen Lichtleiter (3), der an seinem Außenumfang mehrere in Erstreckungsrichtung des Lichtleiters (3) zueinander versetzte optische Auskoppelelemente (5) aufweist, an denen innerhalb des Lichtleiters (3) darauf auftreffendes Licht derart reflektiert wird, dass es an einem dem betreffenden Auskoppelelement (5) gegenüberliegenden Umfangsbereich (7) des Lichtleiters (3) aus diesem austritt, wobei zueinander benachbart nebeneinander angeordnete Auskoppelelemente (5) in Erstreckungsrichtung des Lichtleiters (3) jeweils durch einen auskoppelelementfreien Zwischenbereich (8) voneinander beabstandet sind, **dadurch gekennzeichnet, dass** die Länge (Z), welche die Zwischenbereiche (8) in Erstreckungsrichtung des Lichtleiters (3) aufweisen und die Länge (A), welche die Auskoppelelemente (5) in Erstreckungsrichtung des Lichtleiters (3) aufweisen, in Erstreckungsrichtung des Lichtleiters (3) jeweils derart variieren, dass die Länge (L) der jeweils aus einem Auskoppelelement (5) und einem in Erstreckungsrichtung des Lichtleiters (3) daran angrenzenden Zwischenbereich (8) gebildeten Abschnitte etwa konstant ist.

2. Beleuchtungseinrichtung (1) nach Anspruch 1, **dadurch gekennzeichnet, dass** die Länge (A) der Auskoppelelemente (5) mit zunehmendem Abstand von der Lichteinkoppelfläche (4) derart zunimmt, dass die Helligkeit des aus dem Lichtleiter (3) austretenden Lichts mit zunehmendem Abstand von der Lichteinkoppelfläche (4) zunimmt.

3. Beleuchtungseinrichtung (1) nach Anspruch 1 oder 2, **dadurch gekennzeichnet, dass** der Lichtleiter (3) einen von einer geraden Linie abweichenden, vorzugsweise an die Form einer Fahrzeugaußenhaut angepassten, insbesondere bogenförmig gekrümmten Verlauf aufweist.

4. Beleuchtungseinrichtung (1) nach einem der Ansprüche 1 bis 3, **dadurch gekennzeichnet, dass** die optischen Auskoppelelemente (5) derart ausgebildet sind, dass das innerhalb des Lichtleiters (3) darauf auftreffende Licht der Totalreflexion unterliegt, und dass die Auskoppelelemente (5) vorzugsweise Prismen sind, die gegebenenfalls symmetrisch bezüglich einer quer zur Längserstreckung des Lichtleiters (3) verlaufenden Ebene ausgebildet sind.

5. Beleuchtungseinrichtung (1) nach einem der Ansprüche 1 bis 4, **dadurch gekennzeichnet, dass** die Lichteinkoppelfläche (4) an wenigstens einer Stirnseite des Lichtleiters (3) angeordnet ist, und dass die Lichteinkoppelfläche (4) vorzugsweise an einem im wesentlichen auskoppelelementfreien Lichtleiter-Einkoppelabschnitt (9) vorgesehen ist, an dem sich der Querschnitt des Lichtleiters (3), ausgehend von der Lichteinkoppelfläche (4) zu dem davon entfernten Ende des Einkoppelabschnitts (9) derart vorzugsweise parabelförmig aufweitet, dass das in dem Lichtleiter (3) geführte Licht unter Totalreflexionsbedingungen auf die Umfangswand des Einkoppelabschnitts (9) auftrifft.

6. Beleuchtungseinrichtung (1) nach einem der Ansprüche 1 bis 5, **dadurch gekennzeichnet, dass** die Auskoppelelemente (5) innerhalb eines sich am Außenumfang des Lichtleiters (3) im Wesentlichen in dessen Längsrichtung erstreckenden streifenförmigen Bereiches angeordnet sind.

7. Beleuchtungseinrichtung (1) nach Anspruch 6, **dadurch gekennzeichnet, dass** der streifenförmige Bereich eine in Umfangsrichtung des Lichtleiters (3) verlaufende Komponente aufweist und insbesondere entlang einer Wendel um den Lichtleiter (3) herumgeführt ist.

8. Beleuchtungseinrichtung (1) nach Anspruch 6, **dadurch gekennzeichnet, dass** der die Auskoppelelemente (5) aufweisende streifenförmige Bereich des Lichtleiters (3) wenigstens eine Unterbrechung hat.

9. Beleuchtungseinrichtung (1) nach einem der Ansprüche 1 bis 8, **dadurch gekennzeichnet, dass** der Lichtleiter (3) an seinem Außenumfang wenigstens zwei in Umfangsrichtung des Lichtleiters versetzt zueinander angeordnete streifenförmige Bereiche mit Auskoppelelementen (5) aufweist, wobei die streifenförmigen Bereiche gegebenenfalls quer zur Längserstreckung des Lichtleiters (3) voneinander beabstandet sind.

10. Beleuchtungseinrichtung (1) nach einem der Ansprüche 1 bis 9, **dadurch gekennzeichnet, dass** zumindest der Umfangsbereich des Lichtleiters (3), an dem das innerhalb des Lichtleiters geführte Licht aus diesem austritt, mit einer transparenten Farbschicht beschichtet ist.

## Claims

1. Lighting apparatus (1) for a vehicle, especially a signal lamp, comprising at least one light source (2) and at least one rod-shaped light guide (3) whose light input area (4) is arranged within the light output area of the light source (3), wherein the light guide (3) has a plurality of optical light output elements (5) arranged in an offset pattern on the outer circumference and along the length of the light guide (3) such that the light output elements (5) will reflect incident light from within the light guide (3) to exit the light guide (3) through a section of its circumference (7) opposite the reflecting light output element (5), and wherein adjacent light output elements (5) arranged next to each other along the length of the light guide (3) are separated by an intermediate section (8) not containing any light output elements, **characterized in that** the length (Z) of each intermediate section (8) along the length of the light guide (3) and the length (A) of each light output element (5) along the length of the light guide (3) varies along the length of the light guide (3) such that the length (L) of the sections made up by any one light output element (5) and the intermediate section (8) immediately next to it along the length of the light guide (3) are approximately constant.

2. Lighting apparatus (1) of claim 1, **characterized in that** the length (A) of the light output elements (5) increases with the increase in distance from the light input area (4) such that the brightness of the light exiting the light guide (3) increases with the increase in distance from the light input area (4).

3. Lighting apparatus (1) of claim 1 or 2, **characterized in that** the course of the light guide (3) diverges from a straight line and is preferably adapted to the shape of a vehicle skin and specifically a curvilinear bow shape.

4. Lighting apparatus (1) of one of claims 1 to 3, **characterized in that** the optical light output elements (5) are designed such that the incident light from within the light guide (3) is subject to total internal reflection and such that the light output elements (5) are preferably designed as prisms symmetrical, where applicable, to a plane across the longitudinal length of the light guide (3).

5. Lighting apparatus (1) of one of claims 1 to 4, **characterized in that** the light input area (4) is arranged at at least one face end of the light guide (3) and also **characterized in that** the light input area (4) is preferably provided at a light input section (9) of the light guide (3) which is mainly free from light output elements and designed such that the cross-section of the light guide (3), starting out from the light input area (4) and extending towards the remote end of the light input section (9), preferably opens out along a parabolic curve such that the light passing the light guide (3) hits the circumferential wall of the light input section (9) under conditions of total internal reflection.

6. Lighting apparatus (1) of one of claims 1 to 5, **characterized in that** the light output elements (5) are arranged within a strip-like area extending on the outer circumference and mainly along the length of the light guide (3).

7. Lighting apparatus (1) of claim 6, **characterized in that** the strip-like area has a component going in peripheral direction of the light guide (3) and, specifically, takes a helical course around the light guide (3).

8. Lighting apparatus (1) of claim 6, **characterized in that** there is at least interruption in the strip-like area of the light guide (3) containing the light output elements (5).

9. Lighting apparatus (1) of one of claims 1 to 8, **characterized in that** there are at least two strip-like areas containing light output elements (5) along the outer circumference of the light guide (3) such that the at least two strip-like areas are arranged in an offset pattern in the peripheral direction of the light guide, wherein, as appropriate, said strip-like areas are set off at a distance orthogonally across the length of the light guide (3).

10. Lighting apparatus (1) of one of claims 1 to 9, **characterized in that** a transparent color coat covers at least the circumferential section of the light guide (3) through which the light exits the light guide from within the light guide.

## Revendications

1. Dispositif d'éclairage (1) pour un véhicule, notamment feu de signalisation, avec au moins une ampoule (2) et au moins un guide-lumière (3) en forme de baguette disposé avec sa surface de couplage de la lumière (4) dans la zone de réflexion de la lumière de l'ampoule (3), guide-lumière qui présente sur sa périphérie externe plusieurs éléments de découplage (5) optiquement décalés les uns des autres dans le sens d'allongement du guide-lumière (3), éléments sur lesquels, à l'intérieur du guide-lumière (3), la lumière est réfléchie de telle manière qu'elle s'échappe du guide-lumière sur une section périphérique (7) du guide-lumiere (3) se trouvant en face de l'élément de découplage (5) concerné, les éléments de découplage (5) juxtaposés et voisins les uns des autres étant respectivement écartés par une section intermédiaire (8) dépourvue d'éléments de découplage dans le sens d'allongement du guide-lumière (3), **caractérisé en ce que** la longueur (Z) présentant les sections intermédiaires (8) dans le sens d'allongement du guide-lumière (3) et la longueur (A) présentant les éléments de découplage (5) dans le sens d'allongement du guide-lumière (3) varient respectivement dans le sens d'allongement du guide-lumière (3) de telle sorte que la longueur (L) des sections formées respectivement d'un élément de découplage (5) et d'une section intermédiaire (8) voisine dans le sens d'allongement du guide-lumière (3) est approximativement constante.

2. Dispositif d'éclairage (1) selon la revendication 1, **caractérisé en ce que** la longueur (A) des éléments de découplage (5) augmente avec l'écartement croissant de la surface de couplage de la lumière (4) de manière que la clarté de la lumière sortant du guide-lumière (3) croît avec l'augmentation croissante de l'écartement de la surface de la couplage de la lumière (4).

3. Dispositif d'éclairage (1) selon la revendication 1 ou 2, **caractérisé en ce que** le guide-lumière (3) présente une ligne courbe, notamment en forme de coude, divergeant d'une ligne droite, de préférence adaptée à la forme d'une peau extérieure du véhicule.

4. Dispositif d'éclairage (1) selon l'une des revendications 1 à 3, **caractérisé en ce que** les éléments de découplage optiques (5) sont formés de manière que la lumière se trouvant à l'intérieur du guide-lumière (3) est soumise à une réflexion totale et que les éléments de découplage (5) sont de préférence des prismes qui, le cas échéant, sont de forme symétrique par rapport à un plan perpendiculaire à l'étirement longitudinal du guide-lumière (3).

5. Dispositif d'éclairage (1) selon l'une des revendications 1 à 4, **caractérisé en ce que** la surface de couplage de la lumière (4) est disposée sur au moins une face frontale du guide-lumière (3) et que la surface de couplage de la lumière (4) est prévue de préférence sur une section de couplage du guide-lumière (9) principalement sans éléments de découplage, section sur laquelle la section transversale du guide-lumière (3), partant de la surface de couplage de la lumière (4) en direction de l'extrémité éloignée de la section de couplage (9) s'élargit de préférence en forme de parabole de manière que la lumière guidée dans le guide-lumière (3) heurte la paroi périphérique de la section de couplage (9) sous des conditions de réflexion totale.

6. Dispositif d'éclairage (1) selon l'une des revendications 1 à 5, **caractérisé en ce que** les éléments de découplage (5) sont disposés à l'intérieur d'une section en forme de bande s'étirant sur la périphérie externe du guide-lumière, principalement dans son sens longitudinal.

7. Dispositif d'éclairage (1) selon la revendication 6, **caractérisé en ce que** la section en forme de bande présente un composant se trouvant dans le sens périphérique du guide-lumière (3) et qu'elle est guidée en particulier le long d'une spire autour du guide-lumière (3).

8. Dispositif d'éclairage (1) selon la revendication 6, **caractérisé en ce que** la section du guide-lumière (3) en forme de bande présentant les éléments de découplage (5) possède au moins une interruption.

9. Dispositif d'éclairage (1) selon l'une des revendications 1 à 8, **caractérisé en ce que** le guide-lumière (3), sur sa périphérie externe, présente au moins deux sections à éléments de découplage (5) en forme de bande disposées de manière décalées dans le sens périphérique du guide-lumière, les sections en forme de bande présentant le cas échéant un écart entre elles perpendiculairement à l'allongement longitudinal du guide-lumière (3).

10. Dispositif d'éclairage (1) selon l'une des revendications 1 à 9, **caractérisé en ce qu'**au moins la section périphérique du guide-lumière (3) sur laquelle s'échappe la lumière guidée à l'intérieur du guide-lumière est revêtue d'une couche colorée transparente.
